# EUROPEAN PATENT SPECIFICATION

(11) **EP 3 068 114 B1**
(45) Date of publication and mention of the grant of the patent: **20.02.2019**
(21) Application number: 16163150.2
(22) Date of filing: 20.12.2010
(51) Int. Cl.: H04M 15/00

(54) **METHOD FOR MEASURING AND DISPLAYING INTERNET TRAFFIC OF MOBILE PHONE AND MOBILE PHONE**
VERFAHREN ZUR MESSUNG UND ANZEIGE DES INTERNETVERKEHRS EINES MOBILTELEFONS UND MOBILTELEFON
PROCÉDÉ POUR MESURER ET AFFICHER LE TRAFIC INTERNET D'UN TÉLÉPHONE MOBILE ET TÉLÉPHONE MOBILE

(30) Priority: 12.01.2010 CN 201010000578
(43) Date of publication of application: 14.09.2016
(62) Divisional of application: 15179360.1
(73) Proprietor: Huawei Device (Dongguan) Co., Ltd., Dongguan, Guangdong 523808 (CN)
(72) Inventor: Yuan, Zhiquan, Shenzhen, Guangdong (CN)
(74) Representative: Kreuz, Georg Maria

(56) References cited:
- WO-A1-92/19078
- CN-A- 101 600 186
- JP-A- 2005 184 538
- JP-A- 2007 221 274
- US-A1- 2002 091 599
- US-A1- 2007 117 551
- US-A1- 2008 045 179
- US-A1- 2008 261 603

## Description

### FIELD OF THE INVENTION

The present invention relates to the field of mobile phone terminal technologies, and in particular, to a method for measuring and displaying Internet traffic of a mobile phone and a mobile phone.

### BACKGROUND OF THE INVENTION

With the development of 3G technologies, it is increasingly popular to surf the Internet by using a mobile phone. A user hopes to query Internet traffic. For example, the user subscribes to a monthly Internet-surfing package service and may enjoy a total of 1000 MB Internet traffic. A charge for excess of the traffic is high. Therefore, the user hopes to know current Internet traffic to control subsequent Internet traffic so as to save an expense. Currently, the user may query the Internet traffic by logging in to a Web site of an operator such as China Mobile or China Unicom and entering keywords such as a mobile phone number and personal information, or dial a customer service number or send a short message to know the Internet traffic. However, these methods are all cumbersome, and in order to simplify the operational process of the user, some mobile phones integrate a function of querying the Internet traffic. Specifically, an Internet traffic measuring module is disposed in a mobile phone, and the module implements a function of Internet traffic measurement by counting the Internet traffic. The user does not need to perform querying to the operator, and may view a using condition of the Internet traffic simply by using the user's own mobile phone, which is very convenient. However, during the research, the inventor discovers that the Internet traffic measurement function on a mobile phone performs the measurement only for the mobile phone at present, but currently more and more users use two or more SIM cards on one mobile phone, for example, one SIM card is used in office hours, and another SIM card is used at home, or for a dual-mode or multimode mobile phone, multiple SIM cards may be supported simultaneously. In this case, the original Internet traffic measurement based on the mobile phone cannot meet a requirement.

The document CN 101183950 A shows a traffic measuring system and method. A communication system comprises a mobile phone and several provider side servers. A charging gateway measures the traffic usage of the mobile phone on the provider side. It transmits data regarding the traffic usage to a billing data transmitting unit, which again transmits it to the mobile phone. The mobile phone displays this traffic data to the user.

The document CN 1464732 A shows a method for billing users for services provided to them. The data on their respective sim cards are used for identifying the users.

The document US 2008/045179 A1 shows a mobile telephone, which records usage information. For example, Internet traffic usage is recorded. The mobile telephone operates with a single SIM card. The mobile telephone stores contact destinations. This usage information is transmitted to a server-based billing system, which is not part of the mobile telephone. The billing system separates the usage information for example in business usage and private usage. Independent bills can thereby be created.

The document US 2007/117551 A1 shows a special SIM card for mobile phones. The document shows the use of a single SIM card within the mobile phone. The SIM card performs a service usage monitoring of the traffic generated by the respective mobile phone, the SIM card is located in. The SIM card is adapted to automatically transmit the usage information to a billing server outside of the mobile telephone.

The document US 2008/0261603 A1 shows a system for optimizing cellular telephone call placement with minimal user overhead. The system uses a mobile phone capable of holding more than one SIM card. The SIM cards are registered by the mobile phone and automatically. Each time, a call is placed or an Internet connection is opened, it is determined automatically, which SIM card account to use.

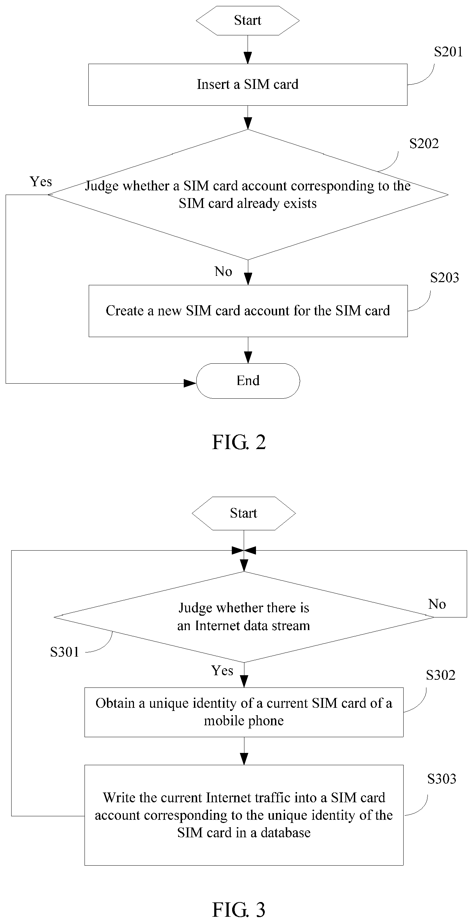

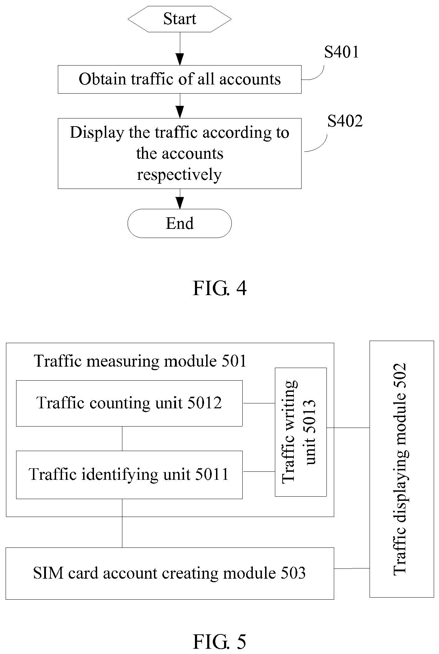

JP 2007 221274 A discloses a mobile telecom terminal having more than two telephone numbers for reducing a communication charge. In particular, figure 4 discloses a process of reduction of a communication charge based on "charge priority selection", and figure 2 provides a storage unit including a charge information section 162 for storing the charge information about the telephone number currently used.

### SUMMARY OF THE INVENTION

According to the first embodiment, a mobile phone for measuring and displaying Internet traffic is provided, wherein at least two SIM cards are inserted into the mobile phone. The mobile phone includes:
a SIM card account creating module configured to create a SIM card account for each inserted SIM card respectively when it is determined that a SIM card account corresponding to the each inserted SIM card does not exist;
a traffic measuring module configured to measure Internet traffic of each corresponding SIM card account respectively; and
a traffic displaying module configured to display the Internet traffic of each SIM card account respectively;
wherein the traffic measuring module (501) is configured to:
   judge whether there is an Internet data stream or not;
   obtain a unique identity of a current SIM card of the mobile phone when there is an Internet data stream; and
   write current Internet traffic into a SIM card account corresponding to the unique identity of the SIM card in a database.

According to the second embodiment, a method for measuring and displaying Internet traffic is provided, wherein at least two SIM cards are inserted into the mobile phone. The method includes:
creating a SIM card account for each inserted SIM card respectively when it is determined that a SIM card account corresponding to the each inserted SIM card does not exist;
measuring, by the mobile phone, Internet traffic of each SIM card account respectively;
displaying, by the mobile phone, the Internet traffic of each SIM card account respectively; when there is an Internet data stream,
wherein the measuring, by the mobile phone, Internet traffic of each SIM card account respectively comprises:
   identifying, by the mobile phone, a SIM card account corresponding to current Internet traffic;
   counting, by the mobile phone, the current Internet traffic, and
   writing, by the mobile phone, the measured Internet traffic into the corresponding SIM card account.

Therefore, in the embodiments of the present invention, the Internet traffic of each SIM card may be measured and displayed respectively, thereby meeting a requirement of a user.

### BRIEF DESCRIPTION OF THE DRAWINGS

FIG. 1 is a flowchart of a method for measuring and displaying Internet traffic of a mobile phone according to an embodiment of the present invention;
FIG. 2 is a flowchart of creating a SIM card account according to another embodiment of the present invention;
FIG. 3 is a flowchart of measuring traffic according to another embodiment of the present invention;
FIG. 4 is a flowchart of displaying traffic according to another embodiment of the present invention; and
FIG. 5 is a schematic diagram of an apparatus for measuring and displaying Internet traffic of a mobile phone according to an embodiment of the present invention.

### DETAILED DESCRIPTION OF THE EMBODIMENTS

In view of a situation where one mobile phone has multiple SIM cards, in the embodiments of the present invention, Internet traffic of each SIM card is measured respectively to meet a requirement of a user for performing traffic measurement for each SIM card, thereby better meeting the requirement of the user.

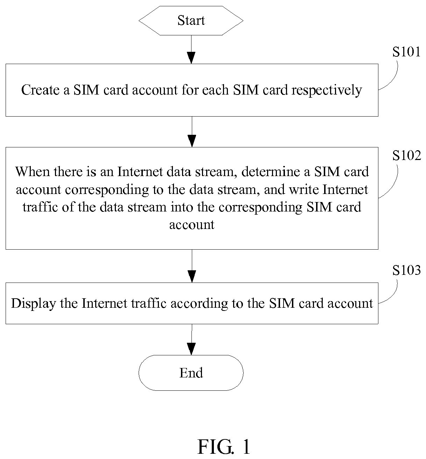

FIG. 1 is a flowchart of a method for measuring and displaying Internet traffic of a mobile phone according to an embodiment of the present invention. The method includes the following steps:
S101: Create a SIM card account for each SIM card respectively.
S102: When there is an Internet data stream, determine a SIM card account corresponding to the data stream, and write Internet traffic of the data stream into the corresponding SIM card account.
S103: Display the Internet traffic according to the SIM card account.

Where, S101 includes:
S101a: Extract from each SIM card a unique identity of the SIM card.
S101b: Create a SIM card account corresponding to the unique identity of the SIM card.

The embodiments of the present invention are described in detail below from each of the stages: creating a SIM card account, measuring Internet traffic, and displaying the Internet traffic.

FIG. 2 is a flowchart of creating a SIM card account according to another embodiment of the present invention, including:
S201: Insert a SIM card.
S202: Judge whether a SIM card account corresponding to the SIM card already exists or not. If the SIM card account corresponding to the SIM card already exists, perform S203; or else, the process ends.
S203: Create a new SIM card account for the SIM card. Then, the process ends.

After a mobile phone is powered on, a background program first judges whether there is an account or not according to the SIM card and an Internet data stream on the mobile phone. If there is an account, the process of creating a SIM card account is skipped. Otherwise, a new SIM card account is created in a database.

FIG. 3 is a flowchart of measuring traffic according to another embodiment of the present invention, including:
S301: Judge whether there is an Internet data stream or not. If there is an Internet data stream, perform S302; or else, keep performing S301.
S302: Obtain a unique identity of a current SIM card of a mobile phone (such as a SIM card number or part of fields of the SIM card number or a coding result of the SIM card number).
S303: Write current Internet traffic into a SIM card account corresponding to the unique identity of the SIM card in a database, and then continue to perform S301.

A background application keeps monitoring whether there is an Internet data stream or not. If there is no Internet data stream, the background application waits. If there is an Internet data stream, the current SIM card account is first obtained and then the Internet traffic is written into the corresponding SIM card account.

FIG. 4 is a flowchart of displaying traffic according to another embodiment of the present invention, including:
S401: Obtain traffic of all accounts.
S402: Display the traffic according to accounts respectively.

An embodiment of the present invention further provides an apparatus for measuring and displaying Internet traffic of a mobile phone. The apparatus may be implemented through software, hardware, or a combination of software and hardware. Specifically, the apparatus is disposed in a mobile phone for a user to query the Internet traffic of each SIM card.

FIG. 5 shows an apparatus for measuring and displaying Internet traffic of a mobile phone according to an embodiment of the present invention. The apparatus includes a traffic measuring module 501, a traffic displaying module 502, and a SIM card account creating module 503, where:
the SIM card account creating module 503 is configured to create a SIM card account for each SIM card respectively; and
the traffic measuring module 501 measures the Internet traffic of each SIM card account respectively, and the traffic displaying module 502 displays the Internet traffic of each SIM card account respectively.

The traffic measuring module 501 includes:
a traffic identifying unit 5011, configured to identify a SIM card account corresponding to the current Internet traffic;
a traffic counting unit 5012, configured to count the traffic; and
a traffic writing unit 5013, configured to write the Internet traffic measured by the traffic counting unit 5012 into the corresponding SIM card account.

The SIM card account creating module 503 includes: an extracting submodule, configured to extract from each SIM card a unique identity of the SIM card; and a creating submodule, configured to create a SIM card account corresponding to the unique identity of the SIM card.

The Internet traffic displayed by the traffic displaying module 502 is displayed in MB or by Internet-surfing time.

It should be noted that there are mature codes or hardware in an existing scheme for implementing the traffic measuring module and the traffic displaying module. Therefore, the prior art may be applied directly in this embodiment of the present invention.

In addition, an embodiment of the present invention further provides a mobile phone for measuring and displaying Internet traffic according to SIM cards, and through the mobile phone, a user may query the Internet traffic of each SIM card.

The mobile phone includes at least the following modules:
a SIM card account creating module, configured to create a SIM card account for each SIM card respectively;
a traffic measuring module, configured to measure Internet traffic of each SIM card account respectively; and
a traffic displaying module, configured to display the Internet traffic of each SIM card account respectively.

The traffic measuring module includes:
a traffic identifying unit, configured to identify a SIM card account corresponding to the current Internet traffic;
a traffic counting unit, configured to count the traffic; and
a traffic writing unit, configured to write the Internet traffic measured by the traffic counting unit into the corresponding SIM card account.

The SIM card account creating module includes: an extracting submodule, configured to extract from each SIM card a unique identity of the SIM card; and a creating submodule, configured to create a SIM card account corresponding to the unique identity of the SIM card.

The Internet traffic displayed by the traffic displaying module is displayed in MB or by Internet-surfing time.

Therefore, in the embodiments of the present invention, the Internet traffic of each SIM card can be measured and displayed respectively, thereby meeting the requirement of the user, where at the time of displaying the traffic, duration may be displayed to the user, for example, Internet-surfing time is displayed, or the amount of used data resources is displayed to the user, for example, that how many megabytes (M) of data resources have been used is displayed.

Using an actual example for description, it is assumed that a user uses two SIM cards, that is, SIM 1 and SIM 2, on a mobile phone. Monthly Internet-surfing package services subscribed by the two cards are different, that is, the service subscribed by SIM 1 is 100 minutes of free Internet-surfing time and a high charge for excess of 100 minutes, while the service subscribed by SIM 2 is 1000 MB free traffic and a high charge for excess of 1000 MB Internet traffic. According to the embodiments of the present invention, the Internet traffic may be measured and displayed for SIM 1 and SIM 2 respectively so that the user can view a current Internet-surfing condition of each SIM card in an intuitive manner. For example, the user knows through a query that the Internet-surfing time that has been used currently by SIM 1 in a current month is 90 minutes, and that the traffic that has been currently used by SIM 2 in the current month is 300 MB. Therefore, the user may properly reduce the use of SIM 1 for surfing the Internet and properly increase the use of SIM 2 for surfing the Internet during the subsequent time of the current month, so as to achieve an object of saving an expense.

Those of ordinary skill in the art may understand that the processes of the methods of the foregoing embodiments may be completed by relevant hardware instructed by a program. The program may be stored in a readable storage medium. When the program is executed, the corresponding steps in the foregoing methods are performed. The storage medium may be an ROM/RAM, a magnetic disk, a CD-ROM, and so on.

The foregoing describes only exemplary embodiments of the present invention. It should be pointed out that for those of ordinary skill in the art, several modifications and improvements may be made without departing from the principle of the present invention, and that these modifications and improvements shall also be deemed to fall within the protection scope of the present invention.

In a first development of the mobile phone for measuring and displaying Internet traffic according to the first embodiment as such, the traffic measuring module comprises:
a traffic identifying unit, configured to identify a SIM card account corresponding to current Internet traffic;
a traffic counting unit, configured to count the traffic; and
a traffic writing unit, configured to write the Internet traffic measured by the traffic counting unit into the corresponding SIM card account.

In a second development of the mobile phone for measuring and displaying Internet traffic according to the first embodiment as such and the first development of the first embodiment, the SIM card account creating module comprises:
an extracting submodule, configured to extract from each SIM card a unique identity of the SIM card; and
a creating submodule, configured to create a SIM card account corresponding to the unique identity of the SIM card.

In a second development of the mobile phone for measuring and displaying Internet traffic according to the first embodiment as such, the first development of the first embodiment, and the second development of the first embodiment, the Internet traffic displayed by the traffic displaying module is displayed by data resource amount or Internet-surfing duration.

In a first development of the mobile phone for measuring and displaying Internet traffic according to the second embodiment as such, the means for measuring Internet traffic comprises:
a means for identifying a SIM card account corresponding to current Internet traffic;
a means for counting the traffic; and
a means for writing the Internet traffic measured by the means for counting the traffic into the corresponding SIM card account.

In a second development of the mobile phone for measuring and displaying Internet traffic according to the second embodiment as such and the first development of the second embodiment, the means for creating a SIM card account comprises:
a means for extracting from each SIM card a unique identity of the SIM card; and
a means for creating a SIM card account corresponding to the unique identity of the SIM card.

In a third development of the mobile phone for measuring and displaying Internet traffic according to the second embodiment as such, the first development of the second embodiment and the second development of the second embodiment, the Internet traffic displayed by the means for displaying is displayed by data resource amount or Internet-surfing duration.

In a first development of the method for measuring and displaying Internet traffic of a mobile phone using more than one SIM card according to the third embodiment as such, the creating a SIM card account for each SIM card respectively comprises:
extracting from each SIM card a unique identity of the SIM card; and
creating a SIM card account corresponding to the unique identity of the SIM card.

In a second development of the method for measuring and displaying Internet traffic of a mobile phone using more than one SIM card according to the third embodiment as such and the first development of the third embodiment, the displayed Internet traffic is displayed by data resource amount or Internet-surfing duration.

## Claims

1. A mobile phone for measuring and displaying Internet traffic, wherein at least two SIM cards are inserted into the mobile phone, and the mobile phone comprises a traffic measuring module (501), a traffic displaying module (502), and a SIM card account creating module (503), wherein:
the SIM card account creating module (503) is configured to create a SIM card account for each inserted SIM card respectively when it is determined that a SIM card account corresponding to the each inserted SIM card does not exist;
the traffic measuring module (501) is configured to measure Internet traffic of each SIM card account respectively; and
the traffic displaying module (502) is configured to display the Internet traffic of each SIM card account respectively;
wherein the traffic measuring module (501) is configured to:
judge whether there is an Internet data stream or not;
obtain a unique identity of a current SIM card of the mobile phone when there is an Internet data stream; and
write current Internet traffic into a SIM card account corresponding to the unique identity of the SIM card in a database.

2. The mobile phone according to claim 1, wherein the SIM card account creating module (503) further comprises:
an extracting submodule, configured to extract from each SIM card a unique identity of the SIM card; and
a creating submodule, configured to create a SIM card account corresponding to the unique identity of the SIM card.

3. A method for measuring and displaying Internet traffic for a mobile phone, wherein at least two SIM cards are inserted into the mobile phone, wherein the method comprising:
creating (S101), by the mobile phone, a SIM card account for each inserted SIM card respectively when it is determined that a SIM card account corresponding to the each inserted SIM card does not exist;
measuring, by the mobile phone, Internet traffic of each SIM card account respectively;
displaying (S103), by the mobile phone, the Internet traffic of each SIM card account respectively: when there is an Internet data stream,
wherein the measuring, by the mobile phone, Internet traffic of each SIM card account respectively comprises:
identifying, by the mobile phone, a SIM card account corresponding to current Internet traffic;
counting, by the mobile phone, the current Internet traffic, and
writing, by the mobile phone, the measured Internet traffic into the corresponding SIM card account.

4. The method according to claim 3, wherein creating, by the mobile phone, a SIM card account for each SIM card respectively, comprising:
extracting, by the mobile phone, each SIM card a unique identity of the SIM card; and
creating, by the mobile phone, a SIM card account corresponding to the unique identity of the SIM card.

## Patentansprüche

1. Mobiltelefon zum Messen und Anzeigen von Internetverkehr, wobei mindestens zwei SIM-Karten in das Mobiltelefon eingelegt werden und das Mobiltelefon ein Verkehrsmessungsmodul (501), ein Verkehrsanzeigemodul (502) und ein SIM-Kartenkontoerzeugungsmodul (503) umfasst, wobei:
das SIM-Kartenkontoerzeugungsmodul (503) dazu konfiguriert ist, ein SIM-Kartenkonto für jeweils jede eingelegte SIM-Karte zu erzeugen, wenn bestimmt wird, dass ein SIM-Kartenkonto, das jeder eingelegten SIM-Karte entspricht, nicht existiert;
das Verkehrsmessungsmodul (501) dazu konfiguriert ist, Internetverkehr jeweils von jedem entsprechenden SIM-Kartenkonto zu messen; und
das Verkehrsanzeigemodul (502) dazu konfiguriert ist, den Internetverkehr jeweils von jedem SIM-Kartenkonto anzuzeigen;
wobei das Verkehrsmessungsmodul (501) konfiguriert ist zum:
Beurteilen, ob es einen Internet-Datenstrom gibt oder nicht;
Erhalten einer eindeutigen Identität einer gegenwärtigen SIM-Karte des Mobiltelefons, wenn es einen Internet-Datenstrom gibt; und
Schreiben des gegenwärtigen Internetverkehrs in ein SIM-Kartenkonto, das der eindeutigen Identität der SIM-Karte entspricht, in eine Datenbank.

2. Mobiltelefon nach Anspruch 1, wobei das SIM-Kartenkontoerzeugungsmodul (503) ferner Folgendes umfasst:
ein Extrahierungssubmodul, das dazu konfiguriert ist, eine eindeutige Identität der SIM-Karte von jeder SIM-Karte zu extrahieren; und
ein Erzeugungssubmodul, das dazu konfiguriert ist, ein SIM-Kartenkonto, das der eindeutigen Identität der SIM-Karte entspricht, zu erzeugen.

3. Verfahren zum Messen und Anzeigen von Internetverkehr für ein Mobiltelefon, wobei mindestens zwei SIM-Karten in das Mobiltelefon eingelegt werden, wobei das Verfahren, das Folgendes umfasst:
Erzeugen (S101), durch das Mobiltelefon, eines SIM-Kartenkontos für jeweils jede eingelegte SIM-Karte, wenn bestimmt wird, dass ein SIM-Kartenkonto, das jeder eingelegten SIM-Karte entspricht, nicht existiert;
Messen, durch das Mobiltelefon, von Internetverkehr jedes jeweiligen SIM-Kartenkontos;
Anzeigen (S103), durch das Mobiltelefon, des Internetverkehrs jedes jeweiligen SIM-Kartenkontos, wenn es einen Internet-Datenstrom gibt,
wobei das Messen, durch das Mobiltelefon, von Internetverkehr jedes jeweiligen SIM-Kartenkontos Folgendes umfasst:
Identifizieren, durch das Mobiltelefon, eines SIM-Kartenkontos, das dem gegenwärtigen Internetverkehr entspricht;
Zählen, durch das Mobiltelefon, des gegenwärtigen Internetverkehrs, und
Schreiben, durch das Mobiltelefon, des gemessenen Internetverkehrs in das entsprechende SIM-Kartenkonto.

4. Verfahren nach Anspruch 3, wobei das Erzeugen, durch das Mobiltelefon,
eines SIM-Kartenkontos für jeweils jede SIM-Karte, das Folgendes umfasst:
Extrahieren durch das Mobiltelefon, einer eindeutigen Identität der SIM-Karte jede SIM-Karte und
Erzeugen durch das Mobiltelefon, eines SIM-Kartenkontos, das der eindeutigen Identität der SIM-Karte entspricht.

## Revendications

1. Téléphone mobile pour mesurer et afficher le trafic Internet, au moins deux cartes SIM étant insérées dans le téléphone mobile et le téléphone mobile comprenant un module de mesure de trafic (501), un module d'affichage de trafic (502) et un module de création de compte de carte SIM (503), où :
le module de création de compte de carte SIM (503) est configuré pour créer un compte de carte SIM pour chaque carte SIM respectivement insérée lorsqu'il est déterminé qu'un compte de carte SIM correspondant à chaque carte SIM insérée n'existe pas ;
le module de mesure de trafic (501) est configuré pour mesurer le trafic Internet de chaque compte de carte SIM correspondant, respectivement ; et
le module d'affichage de trafic (502) est configuré pour afficher le trafic Internet de chaque compte de carte SIM, respectivement ;
où le module de mesure de trafic (501) est configuré pour :
déterminer la présence ou l'absence d'un flux de données Internet ;
obtenir une identité unique d'une carte SIM actuelle du téléphone mobile en cas de présence d'un flux de données Internet ; et
écrire un trafic Internet actuel dans un compte de carte SIM correspondant à l'identité unique de carte SIM dans une base de données.

2. Téléphone mobile selon la revendication 1, dans lequel le module de création de compte de carte SIM (503) comprend en outre :
un sous-module d'extraction, configuré pour extraire de chaque carte SIM une identité unique de la carte SIM ; et
un sous-module de création, configuré pour créer un compte de carte SIM correspondant à l'identité unique de la carte SIM.

3. Procédé pour mesurer et afficher le trafic Internet pour un téléphone mobile, au moins deux cartes SIM étant insérées dans le téléphone mobile, où le procédé comprenant les étapes suivantes :
création (S101), par le téléphone mobile, d'un compte de carte SIM pour chaque carte SIM respectivement insérée lorsqu'il est déterminé qu'un compte de carte SIM correspondant à chaque carte SIM insérée n'existe pas ;
mesure, par le téléphone mobile, du trafic Internet de chaque compte de carte SIM, respectivement ;
affichage (S103), par le téléphone mobile, du trafic Internet de chaque compte de carte SIM, respectivement, en cas de présence d'un flux de données Internet,
où la mesure, par le téléphone mobile, du trafic Internet de chaque compte de carte SIM, respectivement, comprend :
identification, par le téléphone mobile, d'un compte de carte SIM correspondant au trafic Internet actuel ;
comptage, par le téléphone mobile, du trafic Internet actuel ; et
écriture, par le téléphone mobile, du trafic Internet mesuré dans le compte de carte SIM correspondant.

4. Procédé selon la revendication 3, dans lequel la création, par le téléphone mobile, d'un compte de carte SIM pour chaque carte SIM respectivement, comprenant les étapes suivantes :
extraction, par le téléphone mobile, chaque carte SIM une identité unique de la carte SIM ; et
création, par le téléphone mobile, d'un compte de carte SIM correspondant à l'identité unique de la carte SIM.
